# EUROPEAN PATENT APPLICATION

(11) **EP 0 924 830 A1**
(43) Date of publication of application: **23.06.1999**
(21) Application number: 98123938.7
(22) Date of filing: 16.12.1998
(51) Int. Cl.: H02G 3/26

(54) **Magnetic supports for fastening cables, conductors and accessories to the walls and ceiling, in particular of ship cabins or the like**

(30) Priority: 19.12.1997 IT PC970039
(71) Applicant: Vaghini, Alberto, 29100 Piacenza PC (IT)
(72) Inventor: Vaghini, Alberto, 29100 Piacenza PC (IT)
(74) Representative: La Ciura, Salvatore

(57) **Abstract**

The present invention proposes magnetic supports for electrical cables, conductors for the distribution of signals, lamps, cloths-hanger, slides, sensors or the like, said supports being designed, in particular, to be used in ship cabins or the like.

According to the invention, the supports comprise a base (14) provided with a magnetic element (!6), in particular a permanent magnet, and means (15), integral with or fastened to said base, for holding cables and accessories.

In this way it is possible to make a flexible system which allows the easy and quick mounting of cables, accessories and the like, by fastening them to wall or metal ceiling such as, in particular, ship or boat walls.

## Description

The present invention proposes magnetic supports for electrical cables, conductors for the distribution of signals, lamps, cloths-hanger, slides, sensors or the like, said supports being designed, in particular, to be used in ship cabins or the like.

According to the invention, the supports comprise a base provided with a magnetic element, in particular a permanent magnet, and means, integral with or fastened to said base, for holding cables and accessories.

In this way it is possible to make a flexible system which allows the easy and quick mounting of cables, accessories and the like, by fastening them to wall or metal ceiling such as, in particular, ship or boat walls.

The supports according to the invention allow a quick mounting of all these accessories, without making holes, without using screws or the like, thus making the mounting procedures quick and easy.

In accordance with the present state of the art, power and signal distribution installations are constructed manually; the cables, which run through ducts installed in bulkheads and ceilings, are cut to size, the ends stripped, and connected to the various control boards.

This is obviously a very expensive system, as the installation of this distribution network requires a great deal of labour by skilled engineers. Also the other accessories of the cabins like for example sensors, smoke-detectors, lamp-holders, loudspeakers, cloth-holders, pictures etc. are difficult to install, and involve several problems.

In fact, usually the cabin walls are made of really thin panels, which have a metal frame and/or a metal sheathing, and are stiffened with several methods..

For example panels are used, made of thin metal sheets fastened to a stiffening frame, or panels having a honeycomb structure or the like.

Since these panels have very thin walls, despite being quite rigid and resistant, they cannot effectually resist to concentrated loads, like when a screw is inserted into a wall to bear a load.

The problem isn't therefore solved and means are needed, that allow the fastening the accessories to the walls and the ceiling of a cabin in a simple and effective way.

This problem is now solved by the invention, which proposes magnetic supports which are provided with a wide base element, where a permanent magnet is inserted, and means to hold the loads which must be installed or fastened to the wall.

In the description below, specific reference will be made to the special case of a flexible system designed to distribute electrical power and signals in a ship, but the same supports could also be designed for use in used in aircrafts, railway carriages and the like. The reference to the case of a ship is therefore presented by way of example and not of limitation.

The invention will now be described in detail, with reference to the annexed drawings in which:
- figure 1 schematically illustrates a perspective view of a complex of electrical power and signal distribution bars and cables to be installed using the supports of the invention;
- figure 2 is a perspective view of a form of construction of a cable holders in the system of fig. 1;
- figure 3 shows a perspective view of a branch device in the system of figs. 1 and 2;
- Figure 7 is a cross-section of a support in accordance with the invention, designed for ceiling the mounting of the complex of figs. 1 to 3;
- Figures from 5 to 8 show, in section, different embodiments of a support in accordance with the invention.

To fasten cables, accessories or the like to the walls and ceiling of a cabin, the invention provides for the use of magnetic supports, that can applied to a metal wall, at any location, without screwing or other mechanical fastening means.

This solution offers remarkable advantages of flexibility, since it is possible to install the cables with the most practical design.

For example, in the case of a bundle of cables and conductors, the use is provided of a number of power supply bars and cables fitted around the perimeter of suitably spaced holders to distribute electrical power and signals.

These holders could have different configurations.

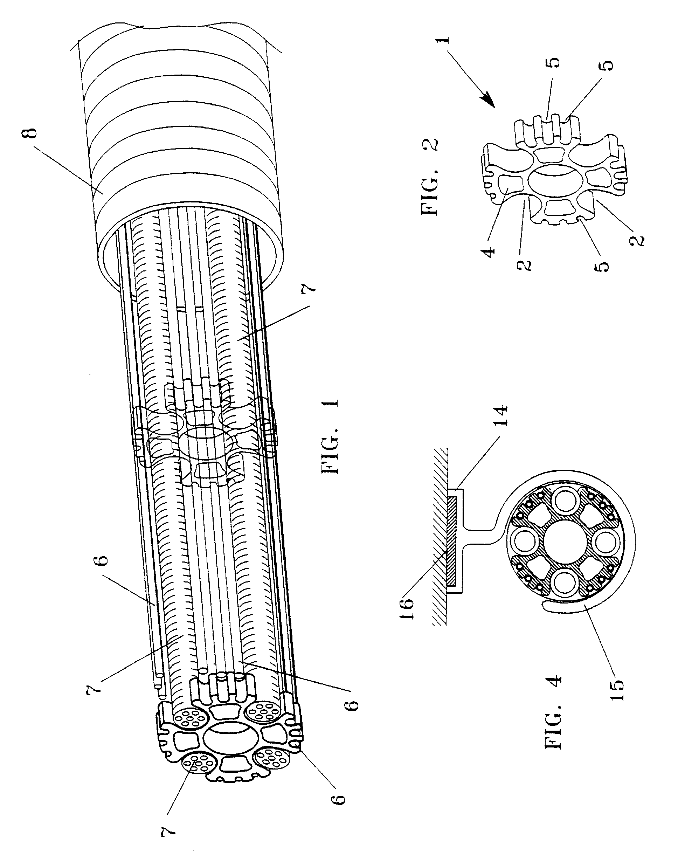

As mentioned, the cables and bars are fitted to holders, one of which is illustrated by way of example in figures 1, which schematically illustrates a bundle of bars and cables fitted to the corresponding holders, as seen when assembly has been completed.

No. 1 indicates one of these holders, which basically consists of a flat discoid element shaped to present a set of cavities 2, distributed in an equiangular pattern, which constitute seatings for the housing of electrical signal distribution cables and the like.

Holder 1 is made of insulating material such as Teflon, nylon or similar material, and seatings 2 are shaped in such a way that the mouth is slightly narrower than the body of the seating, so that the cables can be snap-fitted into each of these cavities as a result of slight elastic deformation of the material constituting the holder.

For this purpose the sectors or lobes shown as no. 3, which alternate with cavities 2, contain holes 4 which serve the dual purpose of lightening the holder and facilitating its slight deformation when the bars or conductors are inserted.

The outer perimeter of each of the said sectors 3 contains a number of notches 5 of suitable size, each designed to receive a rod, power supply bar or conductor preferably constituted by a tubular element made of suitable material such as copper, or ideally aluminium.

These power supply rods are indicated as no. 6 in figure 1.

As already mentioned, notches 5 can be made in different sizes to house different types of bars; for example, rods supplying electricity at the voltage of 220/380V could be positioned in one of sectors 3, 110 volt rods in another sector and rods supplying low-powered current for razors, etc. in another.

This division of holder 1 into sectors, each of which contains notches constituting seatings for a set of bars, enables the various types of conductors to be divided in an orderly manner, thus facilitating assembly of the system still further.

The fact that notches 5 are accessible from the outside means that rods can be added at any time, even after assembly has been completed, so there is no need to complete the entire bundle at the time of commissioning; only the conductors and/or cables actually required need to be installed, while others can be added later as necessary.

As mentioned, cables suitably protected by sheathing, screening, etc. will be inserted in cavities 2; these may be cables with copper conductors or fibre optic cables etc. designed for the transport of signals, such as telephone cables, television signal cables, data transmission cables and information signal transmission cables which connect the various devices in the cabins to the central control systems.

These cables are indicated as no. 7 in the figures.

This complex of conductors, cables and the corresponding holders will be advantageously located inside flexible sheathing of known type, indicated as no. 8 in figure 1 and made of halogen-free materials.

The sheaths basically consist of a concertina-folded tube with a spiral-shaped fabric or metal stiffening rib running along its perimeter; this ribbing prevents the sheath from being crushed when it is bent, and at the same time acts as a screening element.

These bundles of cables and conductors with their holders can be made in different lengths, ready for assembly; the cables and bars will be fitted with male and female connectors at the ends to allow rapid, easy connection.

The system is completed by suitable branch elements which enable power and signals to be tapped from the above-mentioned bundle and conveyed to the boards in each cabin.

A possible form of construction of these elements is illustrated in figure 3. In particular, these branch elements could comprise a casing designed to fit round the outside of the bundle of cables; the said casing might take the form of a sleeve or a pincer-opening ring-shaped element 9, and will be fitted internally with a number of loose crimp contacts 10, inserted before the sleeve.

To insert these cables in a cabin wall use is made of magnetic supports in accordance with the invention.

A first embodiment of these supports, suitable for wall- or ceiling-mounting, is shown in figure 4.

This support comprises a base 14 with an open ring-shaped element 15 into which the sheath containing the bundle of cables and conductors is inserted, could be used to install the bundle.

In accordance with the invention, bases 14 of the brackets comprise a magnetic fixing element 16.

The base and the ring element 14 can be made of any suitable material, such as plastic material.

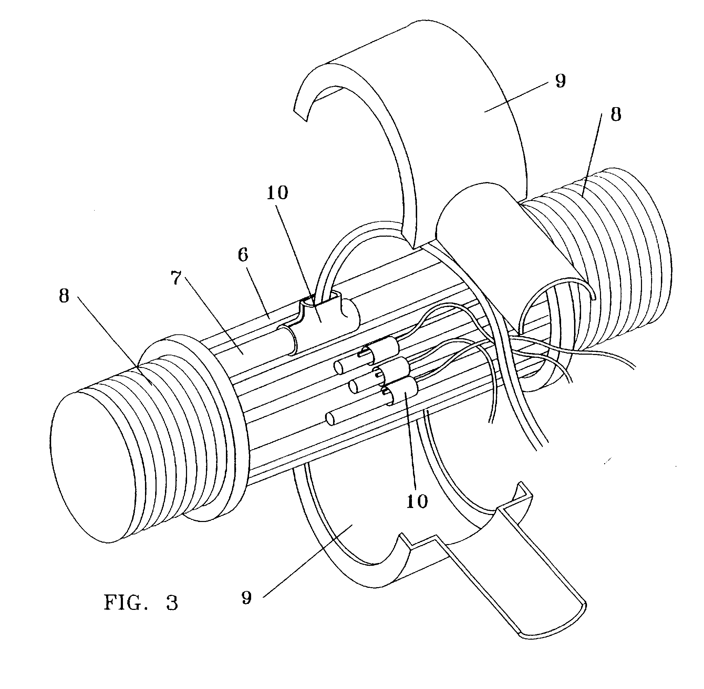

Advantageously, as shown in figure 5, the support could be provided with a close-ring attachment, which is provided with a sliding or elastically deformable element 17, which allows the insertion and holding of a cable bundle.

According to another preferred embodiment, shown in figure 6, the base 14 and the magnet 16 will be provided, in the middle, with a hole 18 for the passage of electrical cables or the like.

Around this hole, a threaded rim 19 will be provided in the lower part 14 for mounting an accessory such as a lamp holder 20, or a sensor like a smoke-detector, or the box of a loudspeaker or the like.

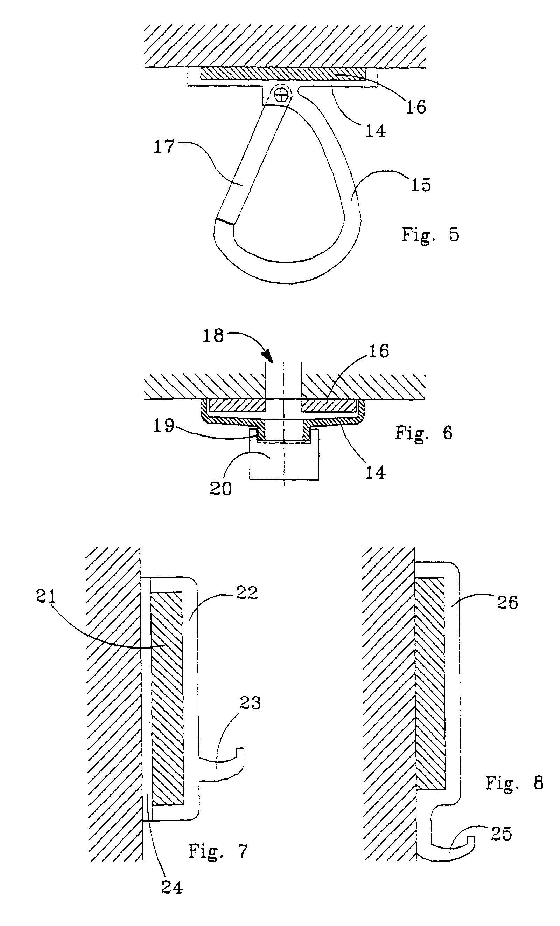

In case of accessories, which must be applied to the wall, supports of the type shown in figures 7 and 8 could be used.

Also in this case a permanent magnet, shown with number 21, is provided in base a 22, which is integral with or is fastened to an attachment 23, that can be a hook, a cloth-holder or the like.

The support surface of this base is preferably coated with a layer 24 made of a scratchproof material.

In accordance with another preferred embodiment of the invention, shown in figure 8, the attachment or hook, shown with number 25, will be advantageously provided at an edge of the base, so that the surface 26 of said base is free, and could be used as a support for decorations, or for notice boards, (for example instructions which must be followed in case of fire or other typical notices which are usually shown on ships) or could be decorated or painted.

Finally, in view of its strength and lightness, user devices such as smoke detectors, loudspeakers, light fittings, ceiling light fixtures, emergency exit lights, lamps, etc. can be hung directly onto the bundle.

The shape of these supports could then be changed, but all the change will fall within the range of protection of the following claims.

## Claims

1. Supports for the wall or ceiling mounting of cables and accessories for ship cabins or the like, characterised by the fact of providing a base (14) provided with magnetic means (16) that make the said base to adhere to a metallic surface, and (15) holding means for mounting said cables and accessories.

2. Supports for the wall or ceiling mounting of cables and accessories for ship cabins or the like in accordance with claim 1, characterised by the fact of providing, inserted into said base (14), one or more permanent magnets (16).

3. Supports for the wall or ceiling mounting of cables and accessories for ship cabins or the like in accordance with claim 1, characterised by the fact of providing, on the surface of said base (14) that rests against the wall or ceiling, a coating (24) made of scratchproof material.

4. Supports for the wall or ceiling mounting of cables and accessories for ship cabins or the like in accordance with claim 1, characterised by the fact of providing holding means comprising a ring (15) closed by a mobile or elastically deformable element (17), that allows the insertion and holding of cables and accessories.

5. Supports for the wall or ceiling mounting of cables and accessories for ship cabins or the like in accordance with claim 1, characterised by the fact of providing, in said base (14), a hole (18) for the passage of electric wires or the like, said base being provided with threaded holding means (19) for the mounting of accessories (20).

6. Supports for the wall or ceiling mounting of cables and accessories for ship cabins or the like in accordance with claim 1, characterised by the fact of providing said holding means (25) at an edge of said base (22), so as to leave the whole surface of the base free.

7. Flexible power and signal distribution system, characterised by the fact that it includes elements in accordance with each of the preceding claims designed to attach a sheaths (8) containing a bundle of cables (7) and conductors (6) to a wall or ceiling, the said elements being constituted by an open ring-shaped bracket (15) made of elastically deformable material, integral with a base (14) designed for wall mounting.
